# EUROPEAN PATENT APPLICATION

(11) **EP 4 454 763 A1**
(43) Date of publication of application: **30.10.2024**
(21) Application number: 23169393.8
(22) Date of filing: 24.04.2023
(51) Int. Cl.: B05B 7/08

(54) **AIR CAP FOR SPRAYING DEVICE**

(71) Applicant: Yara International ASA, 0277 Oslo (NO)
(72) Inventor: Vidts, Pieter, Gentbrugge (BE); Appel, Arthur, Middelburg (NL); Westerterp, Ralf, Hulst (NL)
(74) Representative: De Clercq & Partners

(57) **Abstract**

The present disclosure is related to the field of chemical engineering, in particular spraying devices. The present disclosure provides an air cap for an atomization nozzle, wherein the air cap comprises an open circular top end comprising a circular opening, an open circular bottom end parallel to the open circular top end, said open circular bottom end comprising a circular opening, and a circular wall extending from said open circular bottom end to said open circular top end, said circular wall comprising a thread extending from the bottom end of the circular wall, wherein said thread and is positioned eccentric with respect to the opening of the open circular top end.

## Description

### Field of the disclosure

The present disclosure is related to the field of chemical engineering, in particular spraying devices.

### Background information

The manufacture of industrial products, such as fertilizers, requires different steps and processes. A process found in many manufacturing lines involves the spraying of a liquid composition as fine droplets. Such spraying process may be used to coat particles with a coating composition or to produce granules by spraying the liquid composition onto seed particles.

Granulation is a process wherein a liquid feed is sprayed inside a container comprising particles in movement. The liquid feed is divided into small droplets that come into contact with the particles comprised in the container and solidify on the particles. This mechanism leads to a growth of the particle size until the desired size is obtained.

Different sub-types of granulation exist, such as pan granulation, drum granulation, and fluidized bed granulation, but they all rely on the same principle described above.

Spraying the liquid feed as small droplets is usually done using spraying devices. Such devices continuously receive a liquid feed and inject via its nozzle this feed into the granulator in the form of droplets which size may vary.

Different types of nozzles can be used depending on factors, such as nature of the liquid feed, and the type of granulator. Examples of nozzles include pneumatic nozzles, and atomization nozzles.

Atomization nozzles are devices that require a feed of a compressed gas and a liquid feed. The atomization nozzles combine the gas feed and the liquid feed, such that liquid droplets exit the nozzle and enter the granulator. Spraying devices comprising atomization nozzles are assembled inside a granulator at the end of the pipes carrying the liquid feed and the gas feed.

### Summary of the disclosure

A new air cap for a spraying device comprising an atomization nozzle has been designed. The new design allows to correct situations where the melt injection line and the air injection line are not concentric, which may lead to a sub-optimal spraying pattern and granulation operations.

In a first aspect, the present disclosure provides an air cap for an atomization nozzle, wherein the air cap comprises an open circular top end comprising a circular opening, an open circular bottom end parallel to the open circular top end, said open circular bottom end comprising a circular opening, and a circular wall extending from said open circular bottom end to said open circular top end, said circular wall comprising a thread extending from the bottom end of the circular wall, wherein said thread and is positioned eccentric with respect to the opening of the open circular top end.

In another aspect, the present disclosure provides a granulator comprising a plurality of atomization nozzles, one or more conventional air cap, and one or more air cap according to the present disclosure, wherein:
- the conventional air comprises a circular wall defining an open bottom end comprising ac circular opening, an open top end comprising a circular opening, the open top end being parallel to the open bottom end, and the opening of the open bottom end and the opening of the open top end being concentric;
- the circular wall of the conventional air cap comprises a thread extending from its bottom end, the thread being concentric with the opening of the open top end of the conventional air cap.

### Brief description of the figures

The following description of the figure of a specific embodiment of a system according to the present disclosure is only given by way of example and is not intended to limit the present explanation, its application or use. In the figure, identical reference numerals refer to the same or similar parts and features.
Figure 1 is a view of a conventional air cap, wherein the thread of the circular wall is positioned concentric with the circular opening of the top end of the air cap.
Figure 2 is a view of an air cap according to the present disclosure.
Figure 3 is a view of another air cap according to the present disclosure.
Figure 4 is a view of another air cap according to the present disclosure.
Figure 5 is a view of another air cap according to the present disclosure.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "°/wt" or "weight%", here and throughout the description unless otherwise defined, refers to the relative weight of the respective component based on the overall weight of the formulation.

For spraying devices comprising an atomization nozzle, a great variety of designs can be found, but they all follow the same general concept: the atomization nozzle is located at the end of a melt injection line which receives the liquid feed, and the spraying device also comprises an air cap which surrounds the melt injection line and is configured to receive a gas stream and guide the gas stream to generate liquid droplets.

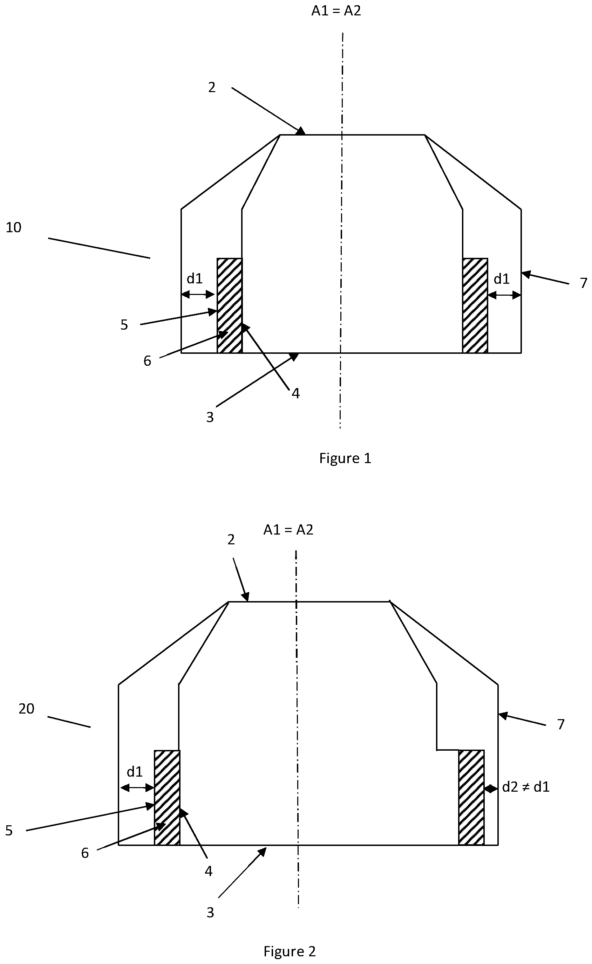

Air caps comprise a circular wall defining an open bottom end configured to receive a gas stream, an open top end, configured to release the gas stream. The bottom end is parallel to the top end, and the bottom end has a larger diameter than the top end. The opening of the top end and the opening of the bottom end are circular. In conventional air caps, the opening of the open bottom end and the opening of the open top end are concentric (see figure 1). The circular wall comprises an internal or external thread extending from its bottom such that it can be screwed onto the air injection line. The thread is concentric with the opening of the open top end.

The design and geometry of atomization nozzles can vary greatly, but one important feature for all atomization nozzles is that the opening of the air cap needs to be concentric with the melt injection line and the nozzle. This ensures a symmetrical spraying pattern of the liquid droplets, which is very important for the stability and reliability of the granulator operations.

In some cases, it was observed that it was difficult to install spraying devices comprising an atomization nozzle and an air cap, such that the opening of the air cap was concentric with the nozzle. In particular, this was the case when installing nozzles in a granulator wherein the ends of the pipes carrying the liquid feed and gas feed were not concentric. Typically, the pipe carrying the liquid feed to a nozzle is located inside the pipe carrying the gas feed, and both pipes should be concentric. However, it was found in some cases that such geometry was impossible to achieve perfectly: the two pipes entering the granulator are welded to the feed lines, and due to the length of the pipes, a very small error on the weld causes a deviation of 1 or 2 mm at the nozzle, which is enough to create an unsatisfactory spraying pattern. The result was that, after installation of the nozzle and the air cap, the opening of the air cap was not concentric with the nozzle and the nozzle created an unsymmetrical spraying pattern.

It has now been found that it is possible to correct that geometrical default by designing new air caps. In an air cap according to the present disclosure, the thread of the circular wall extending from the bottom of the air cap and the open top end of the air cap are not concentric. In other words, the axis of symmetry of the opening of the open top end does not coincide with the axis of symmetry of the thread.

The thread of the circular wall defines a circumference that is positioned eccentric with respect to the circular opening of the top end of the air cap.

As used herein, the bottom end of the air cap always refers to the end with the larger diameter. The air cap is configured such that the gas stream enters the air cap from its bottom end and leaves the air cap at the top end.

In a first aspect, the present disclosure provides an air cap for an atomization nozzle, wherein the air cap comprises an open circular top end comprising a circular opening, an open circular bottom end parallel to the open circular top end, said open circular bottom end comprising a circular opening, and a circular wall extending from said open circular bottom end to said open circular top end, said circular wall comprising a thread extending from the bottom end of the circular wall, wherein said thread and is positioned eccentric with respect to the opening of the open circular top end.

The air cap according to the present disclosure is configured to be screwed and welded onto the threaded end of an air injection line to ensure that the air cap does not move during the operation of the granulator. The fact that the thread of the circular wall and the opening of the open circular top end of the air cap are eccentric ensures that it is possible to find a position along the thread wherein the opening of the open circular top end of the air cap and the nozzle are concentric, ensuring an optimum spraying pattern.

In some embodiments, an air cap according to the present disclosure can be similar to a conventional air cap in that the opening of the open bottom end of the circular wall and the opening of the open top end of the circular wall are concentric, but the thread is eccentric with the opening of the open top end.

In some embodiments, the opening of the open circular top end and the opening of the open circular bottom end are eccentric.

In some embodiments, the opening of the open circular top end and the opening of the open circular bottom end are concentric.

In some embodiments, the open circular top end and the open circular bottom end are eccentric.

In some embodiments, the opening of the open circular top end and the opening of the open circular bottom end are concentric.

In some embodiments, the opening of the open bottom end of the circular wall and the opening of the open top end of the circular wall are eccentric, and the thread is concentric with the opening of the open bottom end and eccentric with the opening of the open top end.

In some embodiments, the distance between the first central axis of the thread and the second central axis of the open circular top end is from 0.5 to 5.0 mm. In industrial granulators, it was often observed that the non-alignment of the air feed and melt feed to the atomization nozzle was only off by a few millimeters. An air cap according to the present disclosure wherein the distance between its first and second central axis is from 0.5 and 5.0 mm was enough to compensate this non-alignment.

In some embodiments, the diameter of the bottom end of the air cap is from 40 to 60 mm. The diameter of the air cap depends on the dimensions of the granulator and the dimensions of atomization nozzles comprised in the granulator.

In some embodiments, the diameter of the top end of the air cap is from 20 to 30 mm.

In some embodiments, the air cap is made of metal, in particular of stainless steel, such as 304 or 316 stainless steel. In some embodiments, the liquid injected by the nozzles is corrosive, and the air cap must be made in a material resistant to corrosion.

In some embodiments, the height of the thread is from 20 to 30 mm.

In another aspect, the present disclosure provides a granulator comprising a plurality of atomization nozzles, one or more conventional air cap, and one or more air cap according to the present disclosure, wherein:
- the conventional air comprises a circular wall defining an open bottom end comprising ac circular opening, an open top end comprising a circular opening, the open top end being parallel to the open bottom end, and the opening of the open bottom end and the opening of the open top end being concentric;
- the circular wall of the conventional air cap comprises a thread extending from its bottom end, the thread being concentric with the opening of the open top end of the conventional air cap.

In some embodiments, the granulator is a fluidized bed granulator, a drum granulator, or a pan granulator.

A granulator, such as a fluidized bed granulator may contain from 10 to 500 atomization nozzles. The number of nozzles depends on factors such as the size of the granulator and the desired production rate. It may be that only a fraction of the atomization nozzles requires an air cap according to the present disclosure while the other fraction can be equipped with conventional air caps, wherein the opening of the open circular bottom end of a conventional air cap is concentric with the opening of the open circular top end of a conventional air cap.

Figure 1 is a view of a conventional air cap **10** cut on its diameter: the air cap **10** comprises an open circular bottom end **3,** an open top circular end **2** parallel and the opening of the open circular bottom end **3** is concentric with the opening of the open circular top end **2.** The open circular bottom end **3** is characterized by a first central axis **A1,** and the open circular top end **2** is characterized by a second central axis **A2.** Since the two ends are concentric, the two axis **A1** and **A2** superpose. The circular wall **7** extending from the bottom end **3** to the top end **2** of the air cap **10** comprises an internal thread **6** extending from the bottom end. Line **4** represents the crest of thread **6,** and line **5** the root of thread **6.**

Figure 2 is a view of an air cap **20** according to the present disclosure cut on its diameter: the air cap **20** comprises an open circular bottom end **3,** an open top circular end **2** parallel with the open circular bottom end **3.** The open circular bottom end **3** is characterized by a first central axis **A1,** and the open circular top end **3** is characterized by a second central axis **A2.** The open circular bottom end **3** and the open top circular end **2** are concentric, so the two axis **A1** and **A2** superpose. The circular wall **7** extending from the bottom end **3** to the top end **2** of the air cap **20** comprises an internal thread **6,** and the internal thread **6** is not concentric with the open circular bottom end **3** and the opening of the open top circular end **2,** as shown on figure 2 by the fact that the distance **d1** from the exterior side of the wall **7** to the root **5** of the thread **6** on one side is different than the opposite distance **d2** from the exterior side of the wall **7** to the root of the thread **6.**

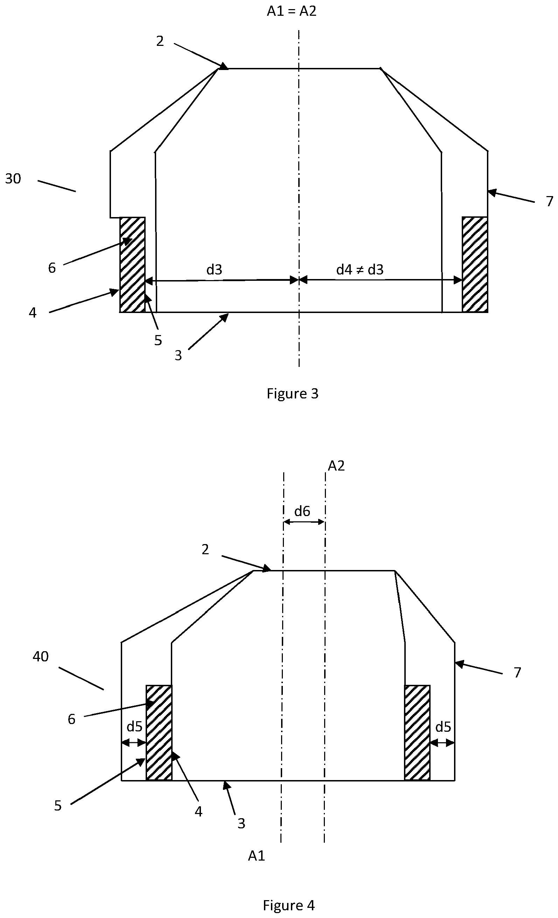

Figure 3 is a view of an air cap **30** according to the present disclosure cut on its diameter: the air cap **30** comprises an open circular bottom end **3,** an open top circular end **2** parallel with the open circular bottom end **3.** The open circular bottom end **3** is characterized by a first central axis **A1,** and the open circular top end **3** is characterized by a second central axis **A2.** The open circular bottom end **3** and the open top circular end **2** are concentric, so the two axis **A1** and **A2** superpose. The circular wall **7** extending from the bottom end **3** to the top end **2** of the air cap **20** comprises an external thread **6,** and the external thread **6** is not concentric with the open circular bottom end **3** and the opening of the open top circular end **2,** as shown on figure 3 by the fact that the distance **d3** from the central axis **A1** of the open circular bottom end **3** to the root **5** of the thread **6** on one side is different than the opposite distance **d4** from the central axis **A1** of the open circular bottom end **3** to the root of the thread **6.**

Figure 4 is a view of an air cap **40** according to the present disclosure cut on its diameter: the air cap **40** comprises an open circular bottom end **3,** an open top circular end **2** parallel with the open circular bottom end **3.** The open circular bottom end **3** is characterized by a first central axis **A1,** and the open circular top end **3** is characterized by a second central axis **A2.** The open circular bottom end **3** and the open top circular end **2** are not concentric, so the two axis **A1** and **A2** do not superpose and are separated by a distance **d6.** The circular wall **7** extending from the bottom end **3** to the top end **2** of the air cap **40** comprises an internal thread **6,** and the internal thread **6** is concentric with the open circular bottom end **3,** but not with the open top circular end **2,** as shown on figure 4 by the fact that the distance **d5** from the exterior side of the wall **7** to the root **5** of the thread **6** on one side is equal to the opposite distance **d5** from the exterior side of the wall **7** to the root of the thread **6.**

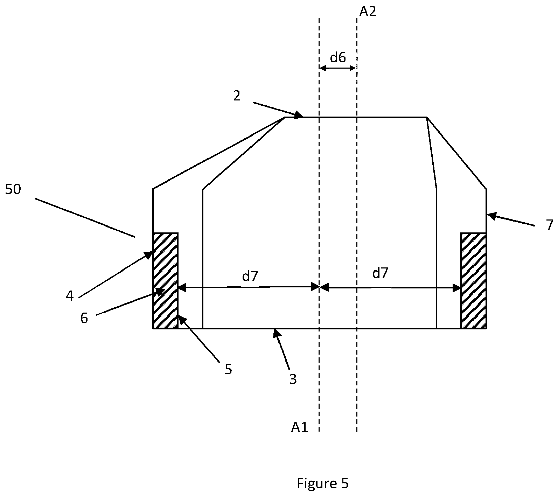

Figure 5 is a view of an air cap **50** according to the present disclosure cut on its diameter: the air cap **50** comprises an open circular bottom end **3,** an open top circular end **2** parallel with the open circular bottom end **3.** The open circular bottom end **3** is characterized by a first central axis **A1,** and the open circular top end **3** is characterized by a second central axis **A2.** The open circular bottom end **3** and the open top circular end **2** are not concentric, so the two axis **A1** and **A2** do not superpose and are separated by a distance **d8.** The circular wall **7** extending from the bottom end **3** to the top end **2** of the air cap **50** comprises an external thread **6,** and the external thread **6** is concentric with the open circular bottom end **3,** but not with the open top circular end **2,** as shown on figure 4 by the fact that the distance **d7** from the first central axis **A1** to the root **5** of the thread **6** on one side is equal to the opposite distance **d7** from the first central axis **A1** to the root of the thread **6.**

## Claims

1. An air cap for an atomization nozzle, wherein the air cap (1) comprises an open circular top end (2) comprising a circular opening, an open circular bottom end (3) parallel to the open circular top end, said open circular bottom end (3) comprising a circular opening, and a circular wall (7) extending from said open circular bottom end (3) to said open circular top end (2), said circular wall (7) comprising a thread (6) extending from the bottom end of the circular wall, **characterized in that** said thread (6) is positioned eccentric with respect to the opening of the open circular top end (2).

2. An air cap according to claim 1, wherein the open circular top end (2) and the open circular bottom end (3) are concentric.

3. An air cap according to claim 1, wherein the open circular top end (2) and the open circular bottom end (3) are eccentric.

4. An air cap according to any one of claims 1 to 3, wherein the thread (6) is internal or external to the circular wall (7).

5. An air cap according to any one of claims 1 to 4, wherein the open circular bottom end (3) comprises a central axis (A1), the open circular top end (2) comprises a central axis (A2), and the distance (d) between the central axis (A1) of the open circular bottom end (3) and the central axis (A2) of the open circular top end (2) is from 1.0 to 5.0 mm.

6. An air cap according to any one of claims 1 to 5, wherein the diameter of the bottom end (3) is from 40 to 60 mm.

7. An air cap according to any one of claims 1 to 6, wherein the diameter of the top end (2) is from 20 to 30 mm.

8. An air cap according to any one of claims 1 to 7, wherein the height of the thread (6) is from 20 to 30 mm.

9. A granulator comprising a plurality of atomization nozzles, one or more conventional air cap, and one or more air cap (1) according to any one of claims 1 to 8, wherein:
- the conventional air comprises a circular wall defining an open bottom end comprising ac circular opening, an open top end comprising a circular opening, the open top end being parallel to the open bottom end, and the opening of the open bottom end and the opening of the open top end being concentric;
- the circular wall of the conventional air cap comprises a thread extending from its bottom end, the thread being concentric with the opening of the open top end of the conventional air cap.

10. The granulator according to claim 9, wherein the granulator is a fluidized bed granulator.
